# EUROPÄISCHE PATENTSCHRIFT

(11) **EP 3 827 663 B1**
(45) Veröffentlichungstag und Bekanntmachung des Hinweises auf die Patenterteilung: **27.03.2024**
(21) Anmeldenummer: 20210082.2
(22) Anmeldetag: 26.11.2020
(51) Int. Cl.: A01G 9/02

(54) **BAUSATZ ZUR MONTAGE EINES BEPFLANZBAREN WANDGARTENS**
KIT FOR MOUNTING A PLANTABLE WALL GARDEN
JEU DE MONTAGE D'UN JARDIN MURAL POUVANT ÊTRE RECOUVERT DE PLANTES

(30) Priorität: 27.11.2019 DE 102019132125
(43) Veröffentlichungstag der Anmeldung: 02.06.2021
(73) Patentinhaber: Wegenast, Klaus, 79102 Freiburg (DE); Richard Brink GmbH & Co. KG, 33758 Schloss Holte-Stukenbrock (DE)
(72) Erfinder: Wegenast, Klaus, 79102 Freiburg (DE); Brink, Stefan, 33758 Schloß Holte-Stukenbrock (DE)
(74) Vertreter: Mertzlufft-Paufler, Cornelius

(56) Entgegenhaltungen:
- EP-A1- 2 323 473
- EP-B1- 3 225 739
- AU-B2- 534 395
- DE-A1- 3 717 877
- DE-U1-202009 009 792
- JP-U- S5 383 448

## Beschreibung

Die Erfindung betrifft einen Bausatz zur Montage eines bepflanzbaren Wandgartens, der gemäß Anspruch 1 aus wenigstens zwei Wandelementen gebildet ist, von denen wenigstens ein Wandelement mindestens ein Pflanzloch aufweist, durch welche die in einem auf der einen Seite der Wandelemente vorgesehenen Pflanzsubstrat verwurzelbarten Pflanzen nach außen hindurchwachsen können.

Aus der Druckschrift DE 20 2009 009 792 U1 ist ein modularer Auflagerahmen zur Begrenzung eines Füllraumes auf einer Bodenfläche, insbesondere auf Erdreich, mit Rahmenseiten aus einem korrosionsbeständigen Material vorbekannt. Der modulare Auflagerahmen ist verrottungssicher und kann z. B. vorübergehend nur so lange zur Begrenzung eines Füllraumes eingesetzt werden, bis zu erwartende Setzungen im Bereich einer umfassten Bodenfläche weitgehend abgeklungen sind. Danach kann der modulare Auflagerahmen wieder abgebaut und anderweitig eingesetzt werden.

Aus der Druckschrift DE 37 17 877 A1 ist eine im Erdreich verankerbare Platte zur Abgrenzung von Beeten, Rasenkanten oder dergleichen vorbekannt. Die Platte weist einen Grundplattenabschnitt auf, entlang dessen oberer Kante eine etwa zur Auflage auf das Erdreich bestimmte Leiste im Wesentlichen rechtwinklig abgebogen ist.

Aus der EP 3 225 739 B1 ist bereits ein Bausatz der eingangs erwähnten Art bekannt, der zur Montage eines als begrünter Hohlkörper ausgebildeten Wandgartens vorgesehen ist. Der vorbekannte Bausatz weist eine Mehrzahl von Profilstäben auf, welche an den Kanten des Hohlkörpers angeordnet und beispielsweise durch Schraubverbindungen und Streben miteinander verbunden sind. Am Umfang des Hohlkörpers sind Wärmedämmstoffplatten vorgesehen, in denen die von den zur Begrünung verwendeten Pflanzen durchsetzten Pflanzlöcher vorgesehen sind. Diese Pflanzen wurzeln in einem Pflanzsubstrat, das im Innenraum des Hohlkörpers vorgesehen ist und dem Hohlkörper durch sein Gewicht zusätzliche Standfestigkeit gibt. Mit Hilfe des vorbekannten Bausatzes lassen sich unterschiedlich gestaltete und sehr stabile Hohlkörper montieren, - jedoch kann es wünschenswert sein, die Montage eines solchen Hohlkörpers noch zusätzlich zu vereinfachen.

Weitere Bepflanzungsmodule sind aus den JP S53 83448 U, EP 2 323 473 A1 und AU 534 395 B2 bekannt, wobei AU 534 395 B2 den einleitenden Teil von Anspruch 1 offenbart.

Es besteht daher die Aufgabe, einen zur Vertikalbegrünung bestimmten Bausatz der eingangs erwähnten Art zu schaffen, mit dem sich rasch und auf einfache Weise ein belastbarer stabiler bepflanzbarer Wandgarten montieren lässt, wobei dieser Wandgarten beispielsweise als Hohlkörper ausgebildet oder auch als Vorwand an einem Bauwerk befestigt sein kann.

Die erfindungsgemäße Lösung dieser Aufgabe besteht bei dem Bausatz der eingangs erwähnten Art insbesondere darin, dass die Wandelemente des Bausatzes durch Steckverbindungen miteinander verbindbar sind, dass von den benachbarten Wandelementen an einander zugewandten Rand- oder Eckbereichen ein erstes Wandelement wenigstens einen Einhängehaken aufweist, der in einen Einhängeschlitz an einem benachbarten zweiten Wandelement derart einführbar ist, dass der wenigstens eine Einhängehaken mit einem Hakenvorsprung eine den zugeordneten Einhängeschlitz umgrenzende Randzone des zweiten Wandelements hintergreift, und dass zumindest an zumindest einem der ersten und/oder der zweiten Wandelemente zumindest ein Pflanzloch vorgesehen ist.

Der erfindungsgemäße Bausatz weist verschiedene Wandelemente auf, die durch Steckverbindungen auf einfache Weise und gegebenenfalls auch werkzeuglos miteinander verbindbar sind. Diese Wandelemente bilden in ihrer zusammengesteckten und somit montierten Gebrauchsstellung beispielsweise den Umfang eines bepflanzbaren Hohlkörpers, oder mit Hilfe dieser Wandelemente kann eine bepflanzbare Vorwand erstellt werden, die an einem Bauwerk befestigt werden kann. Ein solcher Wandgarten, der zur Vertikalbegrünung beispielsweise als Raumteiler im Innen- oder Außenbereich oder auch als begrünte Vorwand verwendet werden kann, ist auf der Innenseite der Wandelemente mit Erde, Sand oder dergleichen Pflanzsubstrat befüllbar. Der Wandgarten weist an zumindest einem seiner Wandelemente Pflanzlöcher auf, durch welche im Pflanzsubstrat verwurzelte Pflanzen nach außen hindurchwachsen können. Von den benachbarten Wandelementen weist an den einander zugewandten Rand- oder Eckbereichen des Wandgartens ein erstes Wandelement wenigstens einen Einhängehaken auf, der in einen Einhängeschlitz an einem benachbarten zweiten Wandelement derart einführbar ist, dass der wenigstens eine Einhängehaken mit einem Hakenvorsprung eine dem zugeordneten Einhängeschlitz umgrenzende Randzone des zweiten Wandelements hintergreift. Da die zum Montieren des bepflanzbaren Wandgartens verwendeten Wandelemente durch einfache Steckverbindungen miteinander verbunden sind, wird die Montage eines solchen bepflanzbaren Wandgartens wesentlich vereinfacht und beschleunigt. Dabei sind an zumindest einem der ersten und/oder zweiten Wandelemente die Pflanzlöcher vorgesehen, die von den im Pflanzsubstrat verwurzelten Pflanzen durchsetzt werden.

Ein aus dem erfindungsgemäßen Bausatz montierter Wandgarten ist erfindungsgemäß als zumindest umfangsseitig geschlossener Hohlkörper ausgebildet, der in seinem Hohlkörper-Innenraum mit Erde, Sand oder dergleichen Pflanzsubstrat befüllbar ist, wobei der als Hohlkörper ausgebildete Wandgarten an zumindest einem seiner den Hohlkörper-Umfang bildenden Wandelemente die Pflanzlöcher aufweist.

Die von den Pflanzen durchsetzten Pflanzlöcher sind zumindest an einem der Wandelemente des Wandgartens vorgesehen. Dabei ist es vorteilhaft, wenn der Hohlkörper an zumindest einer Seite seines Hohlkörper-Umfangs, vorzugweise an zwei gegenüberliegenden Seiten seines Hohlkörper-Umfangs und insbesondere an allen Seiten des Hohlkörper-Umfangs Pflanzlöcher aufweist.

Die Konstruktion und Montage des als bepflanzbarer Hohlkörper ausgebildeten Wandgartens wird noch wesentlich vereinfacht, wenn der aus den Wandelementen des erfindungsgemäßen Bausatzes montierte Hohlkörper einen rechteckigen Querschnitt aufweist.

Um den Hohlkörper aus wenigen, verschiedenen Wandelementen montieren zu können, ist es vorteilhaft, wenn gegenüberliegende Umfangsseiten des Hohlkörpers und insbesondere dessen Schmalseiten jeweils aus einem zweiten Wandelement gebildet sind.

Der aus dem erfindungsgemäßen Bausatz montierte Hohlkörper kann beispielsweise block- oder quaderförmig ausgebildet sein. Um jedoch den am Hohlkörper-Umfang über die Pflanzlöcher vorstehenden Pflanzen möglichst viel Sonnenlicht zu bieten und um das Wachstum dieser Pflanzen zu begünstigen, ist es vorteilhaft, wenn die zweiten Wandelemente trapezförmig ausgebildet sind.

Möglich ist es, dass diese Trapezform des Hohlkörpers einen rechten Winkel einschließt und dass der Hohlkörper an einer Seitenfläche etwa in vertikaler Richtung orientiert ist. Eine gleichmäßige Bestrahlung der an den Seitenflächen des Hohlkörpers vorstehenden Pflanzen wird jedoch begünstigt und die Montage des aus dem erfindungsgemäßen Bausatz montierten und als Hohlkörper ausgebildeten Wandgartens wird wesentlich vereinfacht, wenn die zweiten Wandelemente jeweils die Form eines gleichschenkligen Trapezes aufweisen.

Dabei sieht eine bevorzugte und besonders standfeste Ausführung gemäß der Erfindung vor, dass die längere Grundseite der Trapezform eines jeden zweiten Wandelementes bodenseitig angeordnet ist.

Um aus mehreren solcher bepflanzbarer Hohlkörper einen durchgehenden begrünten Wandgarten zu bilden, und um mehrere solcher Hohlkörper in einer Reihe zueinander anzuordnen, ist es vorteilhaft, wenn die zweiten Wandelemente Pflanzloch-frei ausgebildet sind.

Eine bevorzugte, besonders stabile und belastbare Ausführung gemäß der Erfindung sieht vor, dass die ersten und/oder die zweiten Wandelemente als Blechformteile ausgestaltet sind oder Blechformteile aufweisen. Die Wandelemente können dazu an ihren blechernen Bestandteilen aus einem verzinkten, insbesondere einem sendzimierverzinkten Stahlblech hergestellt sein.

Damit der aus dem erfindungsgemäßen Bausatz montierte und als bepflanzbarer Hohlkörper ausgebildete Wandgarten die Last des im Hohlkörper-Innenraum befindlichen Pflanzsubstrats gut aufnehmen kann, ist es vorteilhaft, wenn die zweiten Wandelemente in ihren mit den ersten Wandelementen verbundenen Randbereichen eine falzförmige Kantung aufweisen, deren Falzgrund dem benachbarten ersten Wandelement als Auflager dient und zumindest einen Einhängeschlitz aufweist.

Dabei sieht eine einfache und vorteilhafte Ausführungsform gemäß der Erfindung vor, bei der die falzförmige Kantung etwa L-förmig ausgebildet ist und mit dem einen Steg der L-Form an einer Schmalseite des benachbarten ersten Wandelements anliegt, um mit dem anderen, als Falzgrund dienenden Steg der L-Form dieses erste Wandelement flachseitig zu hintergreifen, dass der zumindest eine Einhängeschlitz in dem einem freien Rand abgewandten Eckbereich dieses Falzgrundes angeordnet ist. Da die Wandelemente des erfindungsgemäßen Bausatzes belastbar und stabil ausgebildet sein sollen und entsprechend unhandlich sein können, ist es vorteilhaft, wenn die ersten und/oder die zweiten Wandelemente als Blechformteile ausgestaltet sind oder Blechformteile aufweisen.

Eine bevorzugte Weiterbildung gemäß der Erfindung sieht vor, dass die ersten und/oder die zweiten Wandelemente als wärmeisolierende Wandelemente ausgebildet sind. Solche wärmeisolierenden Wandelemente bieten den Vorteil, dass das im Pflanzsubstrat befindliche Wurzelwerk der zur Begrünung vorgesehen Pflanzen gegen eine wachstumshemmende oder -zerstörende Kälte- oder Hitzeeinwirkung geschützt ist. Eine solche wärmedämmende Isolierung der Wandelemente begünstigt ein gutes Wachstum der das auf der Innenseite der Wandelemente befindliche Pflanzsubstrat durchwurzelnden und zur Begrünung vorgesehenen Pflanzen.

Eine mit einem geringen Herstellungsaufwand verbundene, besonders vorteilhafte Ausführungsform gemäß der Erfindung sieht vor, dass die ersten und/oder die zweiten Wandelemente jeweils einen blechernen und insbesondere als Blechformteil ausgebildeten Rahmen haben, in welchem Rahmen zumindest eine Platte eingesetzt ist, die gegebenenfalls wenigstens ein Pflanzloch aufweist.

Erfindungsgemäß ist vorgesehen, dass die ersten und/oder die zweiten Wandelemente jeweils als blecherne und insbesondere als Blechformteil ausgestaltete Kassette(n) ausgebildet sind. Diese Kassetten können beispielsweise aus Blechzuschnitt hergestellt sein, dessen Längs- und/oder Querränder derart abgebogen sind, dass sie die Schmalseiten der Kassette bilden, während der vom Abbug begrenzte Teil- oder Zentralbereich des Blechzuschnitts die eine Flachseite der auf der gegenüberliegenden Flachseite entweder mit einem weiteren Blech geschlossenen oder auch offen ausgestalteten Kassette bildet.

Es kann beispielsweise auch vorgesehen sein, dass die Platte aus zumindest einem außenliegnden Blech und wenigstens einem davon beabstandeten innenliegenden Blech gebildet ist.

So sieht eine stabile und vorteilhafte Ausführung gemäß der Erfindung vor, dass die ersten und/oder die zweiten Wandelemente jeweils eine Wärmeisolierung aus zumindest einem außenliegenden Blech und wenigstens einem davon beabstandeten innenliegenden Blech aufweisen. Da das außenliegende und das demgegenüber innenliegende Blech voneinander beabstandet sind, wird zwischen diesen Blechen ein Zwischenraum gebildet, der eine wärmeisolierende Wirkung ausüben kann.

Dabei sieht eine bevorzugte voreilhafte Ausführungsform gemäß der Erfindung vor, dass in den die Wärmeisolierung bildenden Blechen zumindest ein Pflanzloch vorgesehen ist, und dass der das zumindest eine Pflanzloch umgrenzende Abbug zumindest eines dieser Bleche in Richtung zum benachbarten Blech abgewinkelt ist. Auf diese Weise wird vermieden, dass das im Inneren des Wandgartens befindliche Pflanzsubstrat in den Zwischenraum eindringen kann, der zwischen den eine Wärmeisolierung bildenden Blechen vorgesehen ist.

Um den Abstand zwischen den als Wärmeisolierung dienenden Blechen auch unter Belastung einzuhalten, ist es vorteilhaft, wenn der das zumindest eine Pflanzloch umgrenzende Abbug zumindest eines der eine Wärmeisolierung bildenden Bleche als Abstandhalter dient und dazu vorzugsweise am benachbarten Blech des Wandelementes anliegt. Besonders vorteilhaft ist es, wenn das außenliegende Blech und das innenliegende Blech in den einem Pflanzloch zugeordneten Blechöffnungen mit ihren einander zugewandten Abbiegungen einander anliegen. Dabei können diese Abbiegungen der beiden Bleche auch miteinander vernietet oder dergleichen miteinander verbunden sein.

Der Herstellungsaufwand wird noch zusätzlich reduziert, wenn die zumindest eine Platte als wärmeisolierende Dämmstoffplatte ausgebildet ist.

Die verwendete Dämmstoffplatte kann beispielsweise aus hart verdichteter Glaswolle hergestellt sein. Eine einfache und vorteilhafte Ausführungsform gemäß der Erfindung sieht jedoch vor, dass die zumindest eine Platte eines jeden ersten und/oder zweiten Wandelements als insbesondere wasserbeständige und/oder mechanisch belastbare Hartschaumstoffplatte, vorzugsweise als Extruder-Polystyrol-Hartschaumplatte, ausgebildet ist. Die Platte kann somit aus einem Hartschaum-Material hergestellt werden, das auch unter der Handelsbezeichnung "Styropor" erhältlich ist.

Die Montage der die Platten aufweisenden Wandelemente wird wesentlich erleichtert, wenn die zumindest eine Platte bis zu einem außenliegenden und vorzugsweise umlaufenden Einsetzanschlag in den blechernen Rahmen des zugeordneten ersten und/oder zweiten Wandelements einsetzbar ist. Dieser Einsetzanschlag kann auch durch einen Abbug am blechernen Rahmen des Wandelements gebildet sein. Die Platte wird durch das auf die Platten-Innenseite drückende Pflanzsubstrat somit gegen den insbesondere umlaufenden Einsetzanschlag gedrückt und in ihrer Position im blechernen Rahmen des Wandelements gesichert.

Der mit der Herstellung des erfindungsgemäßen Bausatzes verbundene Aufwand wird vereinfacht, wenn gegenüberliegende Umfangsseiten des als Hohlkörper ausgebildeten Wandgartens und/oder dessen Längsseite(n jeweils) aus mindestens einem ersten Wandelement, vorzugsweise aus mindestens zwei ersten Wandelementen, gebildet sind.

Damit Regenwasser in das Pflanzsubstrat gelangen kann und/oder damit überschüssiges Regenwasser aus dem im Wandgarten befindlichen Pflanzsubstrat abfließen kann, ist es vorteilhaft, wenn der aus dem Bausatz montierte Wandgarten bodenseitig und/oder auf der dem Boden abgewandten Seite offen ausgebildet ist.

Um die Montage eines solchen Wandgartens mit Hilfe des erfindungsgemäßen Bausatzes wesentlich zu erleichtern, ist es vorteilhaft, wenn der Wandgarten an seiner Sichtseite an zumindest einer seiner Seitenflächen aus wenigstens zwei übereinander angeordneten Wandelementen gebildet ist. Da bei einer solchen Ausführung die Gefahr besteht, dass das auf der Innenseite der Wandelemente befindliche Pflanzsubstrat in einem zwischen den Wandelementen verbleibenden Spalt nach außen hindurchsickern kann, ist es vorteilhaft, wenn von den in einer Wandebene übereinander angeordneten benachbarten Wandelementen das eine Wandelement eine sich über den Längsrand dieses Wandelements erstreckende, vorzugsweise innenliegende Abkantung aufweist, mit welcher Abkantung dieses Wandelement den innenliegenden Längsrand des benachbarten Wandelements hintergreift.

Um die die zumindest eine, vorzugsweise wärmeisolierende Platte aufweisenden Wandelemente möglichst einfach herstellen zu können, sieht eine bevorzugte Ausführungsform gemäß der Erfindung vor, dass die ersten und/oder die zweiten Wandelemente an einem ihrer Längsränder und vorzugsweise an dem der Abkantung abgewandten Längsrand eine Doppelkantung aufweisen, durch die eine Aufnahmenut gebildet ist, in welche Aufnahmenut die Platte dieses Wandelements gehalten ist. Bei der Herstellung eines solchen Wandelements lässt sich die Platte in die durch die Doppelkantung gebildete Aufnahmenut einsetzen, um anschließend in die Ebene des Wandelements eingeschwenkt werden zu können.

Die Steckverbindungen zwischen den aneinander angrenzenden ersten und zweiten Wandelementen lassen sich besonders einfach herstellen, wenn das zumindest eine erste und das wenigstens eine zweite Wandelement im Winkel zueinander und vorzugsweise im rechten Winkel zueinander angeordnet sind.

Mit Hilfe des erfindungsgemäßen Bausatzes lässt sich auf einfache Weise ein zur Vertikalbegrünung dienender Wandgarten montieren. Wie bereits oben ausgeführt wurde, kann dieser Wandgarten als ein zumindest umfangsseitig geschlossener Hohlkörper ausgebildet sein. Möglich ist aber auch, dass die Wandelemente zur Montage einer begrünbaren Vorwand verwendet werden, welche begrünbare Vorwand an einem Bauwerk befestigbar ist.

Weiterbildungen gemäß der Erfindung ergeben sich aus den Ansprüchen in Verbindung mit der Zeichnung sowie der Beschreibung. Nachstehend wird die Erfindung anhand eines bevorzugten Ausführungsbeispiels noch näher beschrieben.

Es zeigt:
- Fig. 1: einen in einer perspektivischen Darstellung gezeigten und als Hohlkörper ausgebildeten Wandgarten in seiner Gebrauchsstellung, wobei der als Hohlkörper ausgebildete Wandgarten aus durch Steckverbindungen miteinander verbundenen Wandelementen montiert ist,
- Fig. 2: den Wandgarten aus Fig. 1, wobei ein Teil der auf der Sichtseite des als Hohlkörper ausgebildeten Wandgartens angeordneten Wandelemente aus ihrer Steckverbindung gelöst sind,
- Fig. 3: den Wandgarten aus Fig. 1 und 2 in einer Vorderansicht,
- Fig. 4: den Wandgarten aus den Fig. 1 bis 3 in einem Längsschnitt durch Schnittebene A-A in Fig. 3,
- Fig. 5: einen Detail-Längsschnitt des in den Fig. 1 bis 4 gezeigten und als Hohlkörper ausgebildeten Wandgartens, wobei der in Fig. 4 umkreiste Teilbereich dargestellt ist,
- Fig. 6: ein an der Längsseite des als Hohlkörper ausgebildeten Wandgartens angeordnetes erstes Wandelement und ein an der Schmalseite des Wandgartens angeordnetes zweites Wandelement unmittelbar vor dem Einhängen der zwischen diesen benachbarten Wandelementen vorgesehenen Steckverbindung,
- Fig. 7: die beiden Wandelemente des in den in Fig. 1 bis 5 gezeigten Wandgartens nach dem Einhängen der zwischen ihnen vorgesehenen Steckverbindungen,
- Fig. 8: eine weitere Ausführung eines bepflanzbaren Wandgartens, der hier als begrünbare Vorwand ausgebildet ist, wobei die schmalseitigen zweiten Wandelemente dieser Vorwand bereits an einer Gebäudewand befestigt sind,
- Fig. 9: den Wandgarten aus Fig. 8 beim Einhängen der sicht- oder längsseitig vorgesehenen ersten Wandelemente in die an den zweiten Wandelementen vorgesehenen Steckverbindungen,
- Fig. 10: den als an einem Bauwerk und insbesondere an einer Gebäudewand befestigbaren und als begrünbare Vorwand ausgebildeten Wandgarten in seiner Gebrauchsstellung,
- Fig. 11: den als begrünbare Vorwand ausgebildeten Wandgarten aus den Fig. 8 bis 10 in einer perspektivischen Detail-Darstellung mit Blick auf die im Eckbereich zwischen den ersten und einem zweiten Wandelement vorgesehenen Steckverbindungen,
- Fig. 12: das bereits in den Fig. 1 bis 7 und 9 bis 11 näher dargestellte erste Wandelement, das einen blechernen Rahmen aufweist, in dem eine vorzugsweise wärmeisolierende Platte eingesetzt ist, wobei die Platte in Fig. 12 unmittelbar vor dem Einsetzen in den blechernen Rahmen des ersten Wandelements dargestellt ist,
- Fig. 13: das erste Wandelement in einer perspektivischen Rückansicht, wobei die vorzugsweise wärmeisolierende Platte hier in den blechernen Rahmen dieses Wandelements eingesetzt ist,
- Fig. 14: weitere Ausführungen eines Wandelements, bei dem die wärmeisolierende Platte aus zumindest einem außenliegenden Blech und einem davon beabstandeten innenliegenden Blech gebildet ist, wobei die Bleche an ihrem ein Pflanzloch umgrenzenden Abbug randseitig auf Stoß aneinander anliegen (vgl. Fig. 14a) oder mit ihren das Pflanzloch umgrenzenden Abbiegungen einander überlappen können (vgl. Fig. 14b),
- Fig. 15: ein erstes und damit verbundenes zweites Wandelement in einem Querschnitt im Verbindungsbereich dieser Wandelemente, wobei das zweite Wandelement hier eine etwa L-förmige (Doppel-)Kantung aufweist, bei welcher der außenliegende freie L-Steg der L-förmigen Kantung das erste Wandelement hintergreift und ihm als Auflager dient, und
- Fig. 16: in einem gegenüber Fig. 15 abweichenden Ausführungsbeispiel ein erstes und ein damit verbundenes zweites Wandelement in dem auch hier längsgeschnitten dargestellten Verbindungsbereich dieser Wandelemente, wobei das zweite Wandelement hier nur eine einfache Abkantung aufweist, deren außenliegender freier Rand einen Falzgrund bildet, welcher dem ersten Wandelement ebenfalls als Auflager dienen kann.

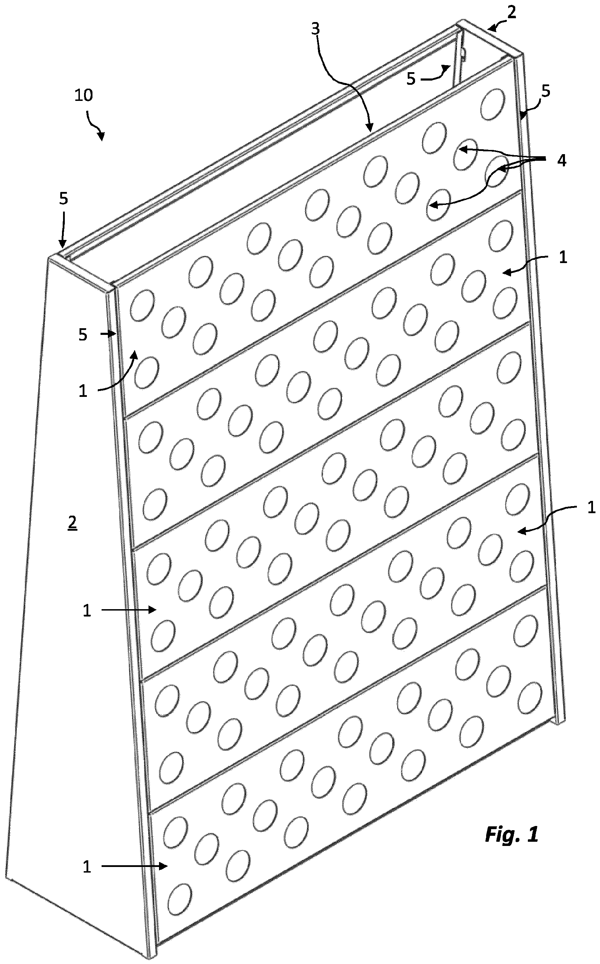

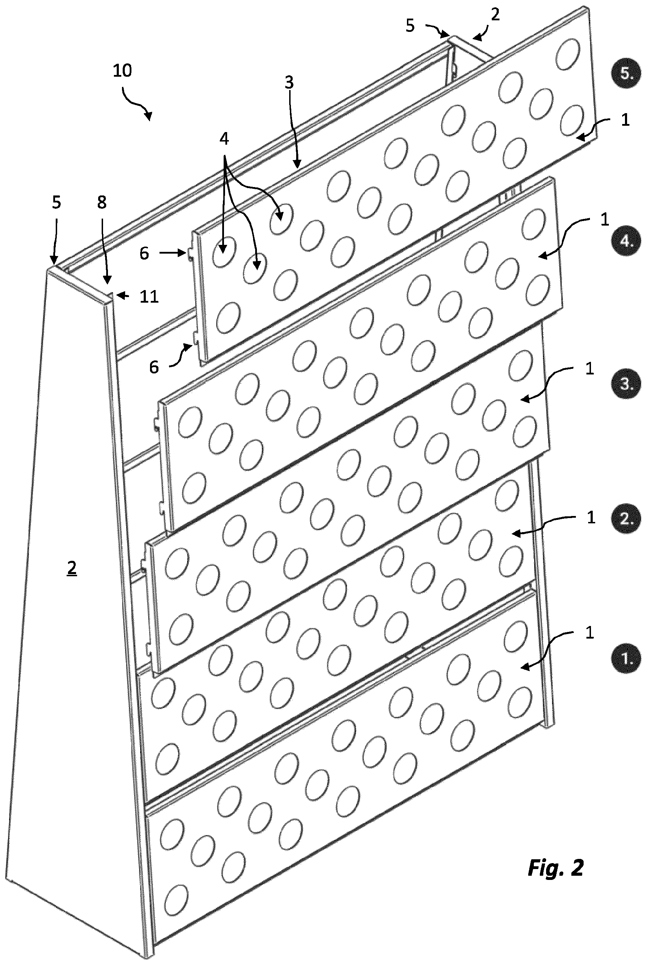

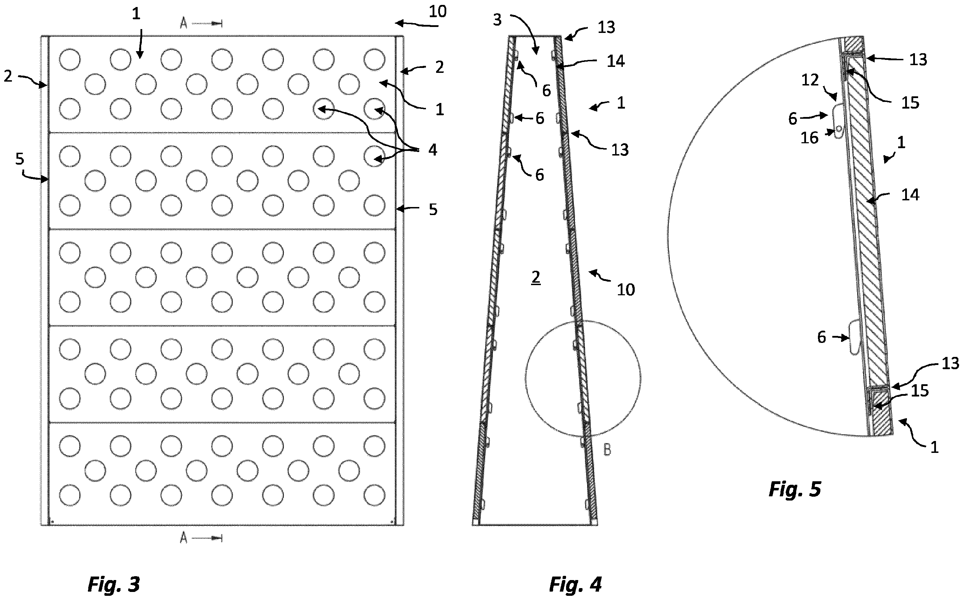

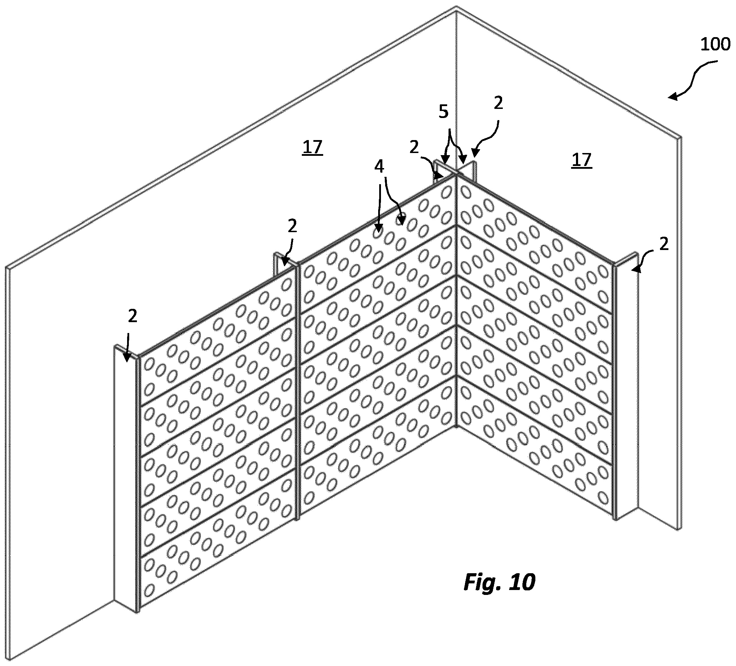

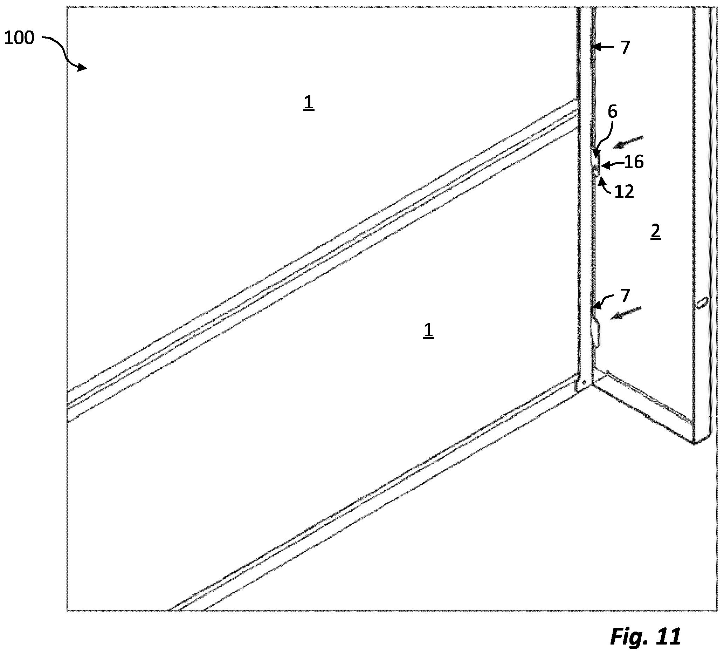

In den Fig. 1 bis 4 und 10 ist ein zur Vertikalbegrünung dienender Wandgarten in verschiedenen Ausführungen dargestellt, der rasch, einfach und gegebenenfalls auch werkzeuglos aus einem Bausatz montiert werden kann, welcher die in den Fig. 5 bis 7 sowie 8 bis 9 und 11 näher gezeigten Wandelemente 1, 2 aufweist. Während der in den Fig. 1 bis 4 gezeigte Wandgarten als begrünter Hohlkörper 10 ausgebildet ist, ist der Wandgarten in Fig. 10 als Vorwand 100 ausgestaltet, die an einem Bauwerk und insbesondere an einer Gebäudewand 17 befestigt werden kann. Die in den Fig. 1 bis 4 und 10 dargestellten Wandgärten lassen sich aus einem Bausatz montieren, der im Wesentlichen erste und zweite Wandelemente 1, 2 aufweist, die durch Steckverbindungen zusammengesteckt und miteinander verbunden werden können. Von den benachbarten Wandelementen 1, 2 weist an den einander zugewandten Randoder Eckbereichen 5 der in den Fig. 1 bis 4 und 10 dargestellten Wandgärten ein erstes Wandelement 1 wenigstens einen Einhängehaken 6 auf, der in einen Einhängeschlitz 7 an einem benachbarten zweiten Wandelement 2 derart einführbar ist, dass der wenigstens eine Einhängehaken 6 mit einem Hakenvorsprung 12 eine den zugeordneten Einhängeschlitz 7 umgrenzende Randzone des zweiten Wandelements 2 hintergreift. Da die zum Montieren der bepflanzbaren Wandgärten verwendeten Wandelemente 1, 2 durch einfache Steckverbindungen miteinander verbunden sind, wird die Montage eines solchen bepflanzbaren Wandgartens wesentlich vereinfacht und beschleunigt. Dabei sind zumindest an einzelnen der ersten und/oder zweiten Wandelemente 1, 2 die von der Außenseite des Wandgartens zu dessen Innenseite führenden Pflanzlöcher 4 vorgesehen, die von den Pflanzen durchsetzt werden, welche in dem im Inneren der Wandgärten befindlichen Pflanzsubstrat verwurzelt sind. Durch diese Pflanzlöcher 4 können die in dem auf der Innenseite der Wandelemente 1, 2 vorgesehenen Pflanzsubstrat verwurzelten Pflanzen nach außen hindurchwachsen.

Wie aus den Fig. 1 bis 4 und 8 bis 10 deutlich wird, sind die Schmalseiten der Wandgärten jeweils aus einem zweiten Wandelement 2 gebildet. Diese zweiten Wandelemente 2 sind hier als Blechformteile ausgebildet. Sie weisen in ihren mit den ersten Wandelementen 1 verbundenen Randbereichen eine falzförmige Kantung 8 auf, deren Falzgrund 9 den benachbarten ersten Wandelement 1 als Auflager dient. Da das an der Innenseite auch der ersten Wandelemente 1 anliegende Pflanzsubstrat diese ersten Wandelemente nach außen drückt, werden auch die in den zugeordneten Einhängeschlitz 7 eingehakten Einhängehaken 6 belastet und zusätzlich in ihrer Position gehalten.

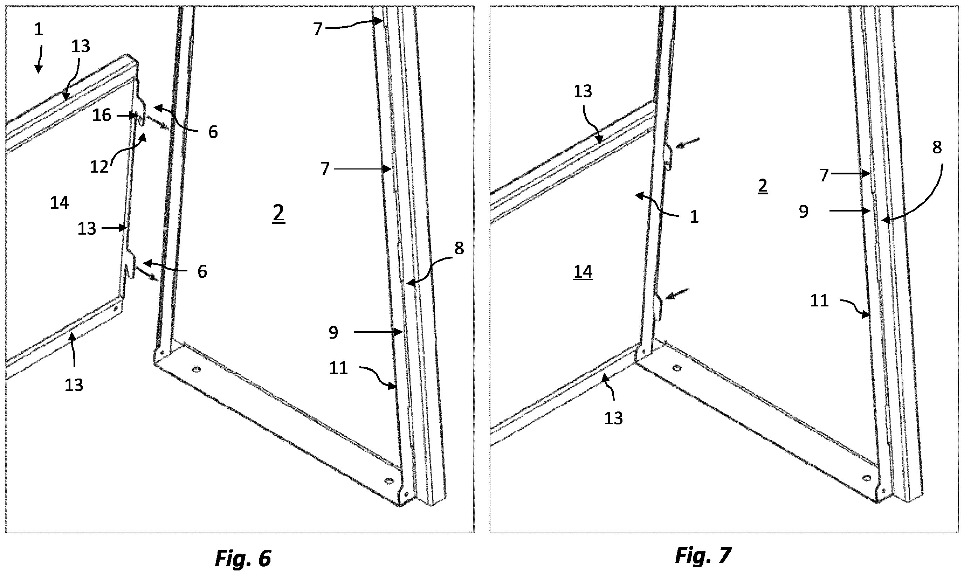

Wie aus den Fig. 6 und 7 deutlich wird, weist der Falzgrund 9 in seinem dem freien Rand 11 abgewandten Eckbereich der Kantung 8 die Einhängeschlitze 7 auf.

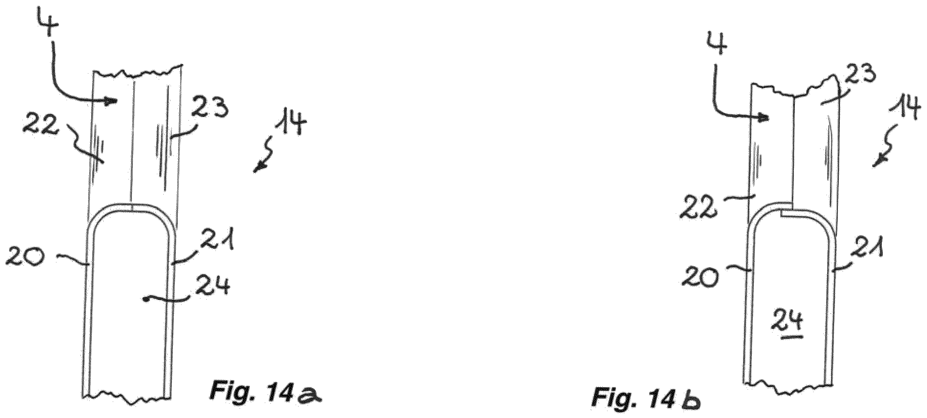

Die Längsseiten der Wandgärten werden jeweils durch zumindest zwei erste Wandelemente 1 gebildet. Diese ersten Wandelemente 1 haben jeweils einen als Blechformteil ausgebildeten Rahmen 13, in welchem Rahmen 13 eine Platte 14 eingesetzt ist, die vorzugsweise wenigstens ein Pflanzloch 4 und insbesondere eine Mehrzahl von Pflanzlöchern 4 aufweist. Die Platte 14 ist vorzugsweise als wärmeisolierende Platte ausgebildet und aus einem wasserbeständigen und mechanisch belastbaren Material hergestellt. Wie anhand der Fig. 14 nachstehend noch näher erläutert wird, kann die Platte 14 aus zumindest einem außenliegenden Blech 20 und einem davon beabstandeten innenliegenden Blech 21 gebildet sein, die zwischen sich einen wärmeisolierenden Zwischenraum 24 begrenzen. Die Platte 14 beispielsweise der ersten Wandelemente 1 kann dazu aber auch aus verdichteter Glaswolle oder beispielsweise auch aus einem geeigneten Hartschaumstoffmaterial hergestellt sein. Die wärmeisolierende Eigenschaft der Platten 14 bietet dem im Pflanzsubstrat verwurzelten Wurzelwerk der Pflanzen einen zusätzlichen Kälte- und Hitzeschutz, der das Pflanzenwachstum fördert.

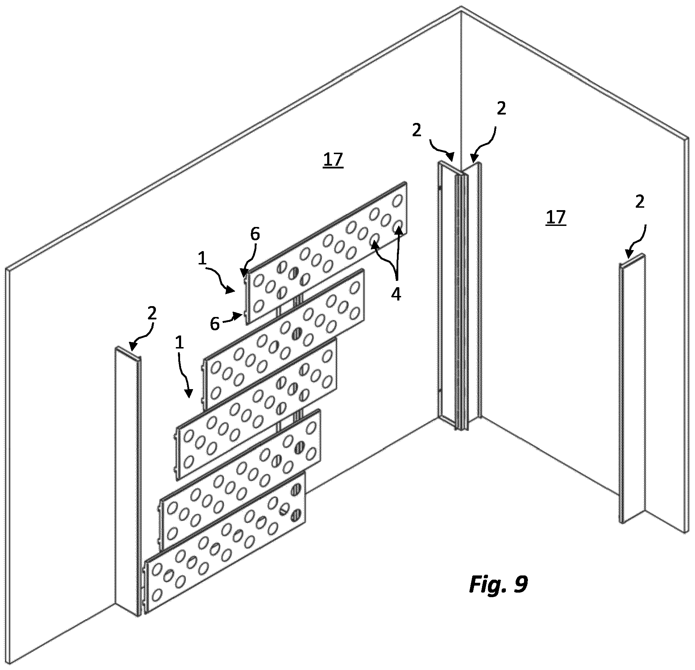

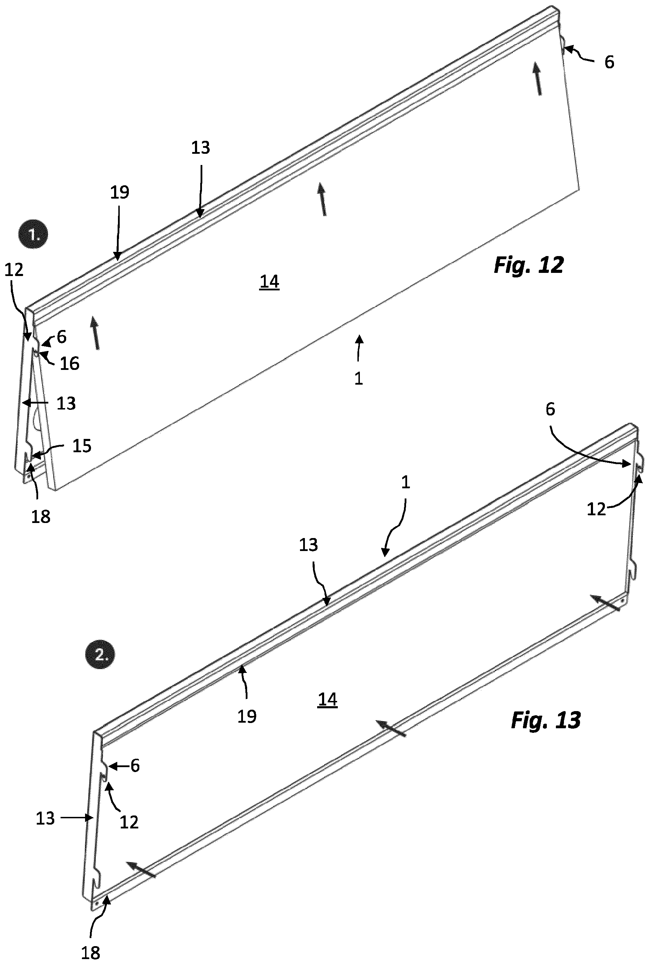

Wie aus den Fig. 12 und 13 deutlich wird, ist die Platte 14 in den zugeordneten blechernen Rahmen 13 des ersten Wandelements 1 von der in Gebrauchsstellung die Innenseite des Wandgartens bildenden Seite aus bis zu zumindest einem Einsetzanschlag, vorzugsweise zu einem umlaufenden Einsetzanschlag 15, der hier als Abbug ausgebildet ist, in den zugeordneten Rahmen 13 des zweiten Wandelements 2 einsetzbar. Aus einem Vergleich der Fig. 9 und 12 bis 13 wird deutlich, dass von den in einer Wandebene übereinander angeordneten benachbarten Wandelementen 1 das eine Wandelement 1 eine sich über den Längsrand dieses Wandelements 1 erstreckende, vorzugsweise innenliegende Abkantung 18 aufweist, mit welcher Abkantung 18 dieses Wandelement 1 den innenliegenden Längsrand des benachbarten Wandelements 1 hintergreift. Die ersten Wandelemente 1 weisen vorzugsweise an dem der Abkantung 18 abgewandten oben liegenden Längsrand eine Doppelkantung 19 auf, durch die eine Aufnahmenut gebildet ist, in welche Aufnahmenut die Platte 14 dieses Wandelements 1 gehalten ist. In Fig. 12 und 13 ist dargestellt, dass die Platte 14 zunächst in die durch die Doppelkantung 19 gebildete Aufnahmenut eingesetzt wird, wobei anschließend diese Platte 14 des Wandelements 1 in die Ebene des blechernen Rahmens 13 eingeschwenkt wird.

Anhand der Fig. 12 und 13 ist auch erkennbar, dass das erste und/oder das zweite Wandelement statt als Rahmen auch als Kassette ausgebildet sein kann. Ein solches, als Kassette ausgebildetes Wandelement wird aus einem Blechzuschnitt hergestellt, dessen Längs- und/oder Querränder derart abgebogen sind, dass sie die Schmalseiten der vorzugsweise kasten- oder kuchenblechförmigen Kassette bilden, während der vom Abbug begrenzte Teil- oder Zentralbereich dieses Blechzuschnitts die eine Flachseite der auf der gegenüberliegenden Flachseite offen ausgebildeten Kassette bildet. In die insbesondere kastenförmige Kassette kann anschließend eine wärmeisolierende Platte eingesetzt werden. Möglich ist auch, die kastenförmige Kassette durch einen deckelartigen Blechzuschnitt derart zu schließen, dass zwischen dem außenliegenden Blech der Kassette und dem davon beabstandeten innenliegenden Blech der Kassette zumindest die umschlossene Luft als Wärmeisolierung dienen kann.

Die in den Fig. 1 bis 4 und 10 gezeigten Wandgärten sind hier bodenseitig und auf der dem Boden abgewandten Seite offen ausgebildet. Somit kann auch Regenwasser in das im Inneren der Wandgärten befindliche Pflanzsubstrat gelangen. Da die Wandgärten auch bodenseitig offen ausgebildet sind, kann überschüssiges Wasser aus dem Inneren der Wandgärten in das Erdreich abfließen, wenn die in den Fig. 1 bis 4 und 10 gezeigten Wandgärten im Außenbereich verwendet werden. Bei einer Verwendung im Innenbereich kann es vorteilhaft sein, wenn die Wandgärten bodenseitig geschlossen ausgebildet sind und/oder den Wandgärten eine bodenseitige Auffangwanne zugeordnet ist.

Wie aus den Fig. 6 und 7 erkennbar ist, sind die Einhängehaken 6 hier etwa L-förmig ausgebildet, wobei der freie Schenkel dieser L-Form den Hakenvorsprung 12 bildet. An dem in Gebrauchsstellung in den Hohlkörper-Innenraum 3 vorstehenden Hakenvorsprung 12 kann eine Einhängesicherung vorgesehen sein. Wie beispielsweise aus den Fig. 6 und 7 erkennbar ist, ist dazu an zumindest einzelnen der Hakenvorsprünge 12 ein Loch 16 vorgesehen, in das bei Bedarf ein Sicherungssplint oder dergleichen Sicherungsmittel einsetzbar ist.

Die Wandelemente 1, 2 des hier dargestellten Bausatzes sind durch die hier vorgesehenen Steckverbindungen lösbar miteinander verbindbar. Möglich ist aber auch, dass die Steckverbindungen des Bausatzes derart ausgestaltet sind, dass der wenigstens eine Einhängehaken nach dem Einführen in einen Einhängeschlitz unlösbar in dem Einhängeschlitz verhakt ist.

Der in den Fig. 1 bis 4 gezeigte Wandgarten ist hier als bepflanzbarer Hohlkörper 10 ausgebildet. Dieser Hohlkörper 10, der als Raumteiler im Innen- oder Außenbereich oder als begrünte Wand verwendet werden kann, ist in seinem Hohlkörper-Innenraum 3 mit Erde, Sand oder dergleichen, hier nicht weiter dargestelltem Pflanzsubstrat gefüllt. Der Hohlkörper 10 weist an seinem durch die Wandelemente 1, 2 umgrenzten Hohlkörper-Umfang die Pflanzlöcher 4 auf, durch welche die im Pflanzsubstrat verwurzelten Pflanzen aus dem Hohlkörper 10 hindurch nach außen wachsen. Die zur Montage eines solchen bepflanzbaren Hohlkörpers 10 verwendeten Wandelemente 1, 2 bilden in ihrer montierten Gebrauchsstellung den Hohlkörper-Umfang. Dabei sind die zweiten Wandelemente 2 des als Hohlkörper 10 ausgebildeten Wandgartens hier trapezförmig ausgebildet. Da die zweiten Wandelemente 2 hier jeweils die Form eines gleichschenkligen Trapezes aufweisen, und da die längere Grundseite dieser Trapezform eines jeden zweiten Wandelementes 2 bodenseitig angeordnet ist, verjüngt sich der Hohlkörper 10 vom Boden aus in Richtung nach oben. Die aus den Pflanzlöchern 4 vorstehenden Pflanzen, die hier nicht gezeigt sind, werden somit gleichmäßig mit Sonnenlicht beschienen.

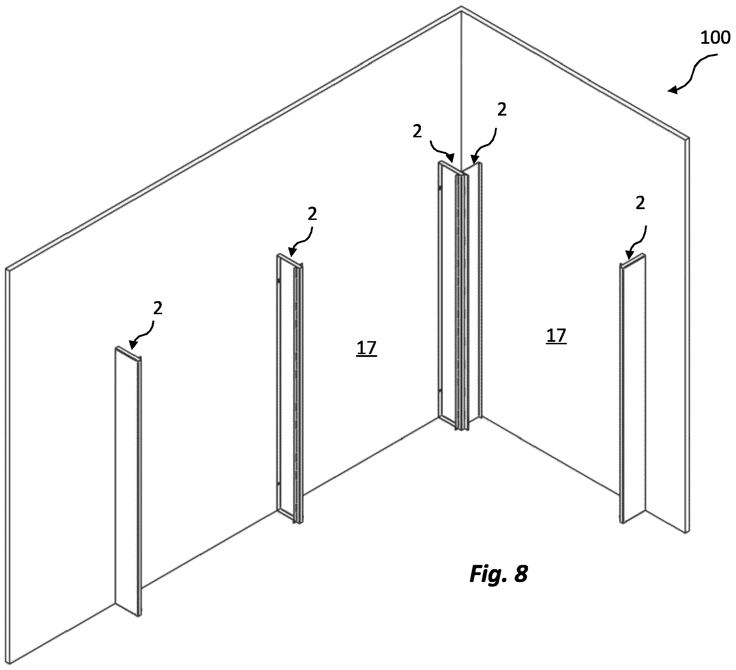

Wie aus den Fig 8 bis 10 deutlich wird, sind die zweiten Wandelemente 2 des als begrünbare Vorwand 100 ausgebildeten Wandgartens demgegenüber tafelförmig ausgebildet. Dabei können die tafelförmigen zweiten Wandelemente 2 des als Vorwand 100 ausgebildeten Wandgarten mittels an sich üblicher Schraubverbindungen an einem Bauwerk und insbesondere - wie hier - an einer Gebäudewand 17 befestigt werden.

Um mehrere der als Vorwand 100 ausgestalteten Wandgärten in einer Reihe zueinander aufzustellen, können diese Vorwände 100 mit ihren schmalseitigen Wandelementen 2 aneinander anliegen. Möglich ist aber auch, dass die zueinander benachbarten und als Vorwand 100 ausgebildeten Wandgärten - wie hier - ein gemeinsames schmalseitiges zweites Wandelement 2 haben, das dazu auf gegenüberliegenden Seiten Einhängeschlitze 7 für die Einhängehaken 6 an den angrenzenden ersten Wandelementen 1 aufweist.

Die hier dargestellten Wandgärten 10, 100 können nicht nur an ihren längsseitigen ersten Wandelementen 1 die für die Bepflanzung vorgesehenen Pflanzlöcher 4 aufweisen, vielmehr ist es auch möglich, dass zumindest eines der schmalseitig vorgesehenen zweiten Wandelemente 2 ebenfalls Pflanzlöcher 4 hat.

Anhand der Fig. 14 ist angedeutet, dass die zur Wärmeisolierung vorgesehene Platte 14 auch aus einem außenliegenden Blech 20 und einem davon beabstandeten innenliegenden Blech 21 gebildet sein kann. Da diese Bleche 20, 21 auf Abstand voneinander angeordnet sind, wird zwischen diesen Blechen ein wärmeisolierender und vorzugsweise mit Umgebungsluft gefüllter Zwischenraum 24 gebildet. Aus einer zusammenschauenden Betrachtung der Fig. 14a und 14b ist erkennbar, dass auch die aus den Blechen 20, 21 gebildete Platte 14 zumindest ein Pflanzloch 4 aufweisen kann. Dabei weisen die Bleche 20, 21 an ihren einander zugeordneten und das Pflanzloch 4 umgrenzenden Blechöffnungen jeweils einen Abbug auf, wobei diese Abbiegungen an den Blechen 20, 21 in Richtung zum benachbarten Blech 21 bzw. 20 abgewinkelt sind. Der Abbug 22, 23 dieser Bleche 20, 21 kann auf Stoß aneinander anliegen, wie dies in Fig. 14a gezeigt ist. Möglich ist aber auch, dass der Abbug 22, 23 dieser Bleche 20, 21 einander überlappend angeordnet ist, so dass der das zumindest eine Pflanzloch 4 umgrenzende Abbug zumindest eines dieser, eine Wärmeisolierung bildenden Bleche 20, 21 als Abstandhalter dient und dazu am benachbarten Blech des Wandelementes anliegt.

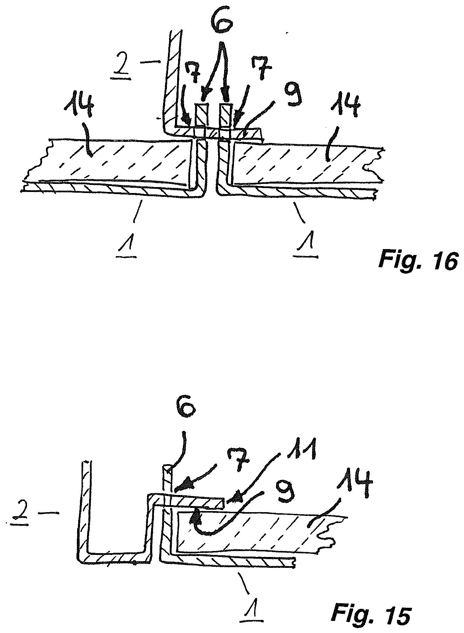

Wie in Fig. 15 dargestellt ist, kann das zweite Wandelement 2 eine etwa L-förmige (Doppel-)Kantung aufweisen, wobei der eine Steg dieser L-förmigen Abkantung an einem Schmalrand des benachbarten ersten Wandelements 1 anliegt, während der andere, als Falzgrund dienende Steg der L-förmigen Abkantung dieses erste Wandelement 1 hintergreift und dem ersten Wandelement 1 als Auflager dient. Dabei ist der Einhängeschlitz 7 in dem dem freien Rand 11 abgewandten Eckbereich des Falzgrundes 9 angeordnet.

Aus dem Vergleich der Fig. 15 und 16 ist erkennbar, dass das zweite Wandelement 2 stattdessen auch eine einfache falzförmige Abkantung aufweisen kann, so dass der randseitige Falzgrund 9 dem zumindest einen benachbarten ersten Wandelement 1 als Auflager dient (siehe Fig. 16). In diesem, durch die falzförmige Kantung gebildeten Falzgrund sind hier zumindest zwei Einhängeschlitze 7 vorgesehen, in welche die an den zueinander benachbarten ersten Wandelementen 1 angeordneten Einhängehaken befestigt werden können.

### Bezugszeichenliste

- 1: erstes Wandelement
- 2: zweites Wandelement
- 3: Hohlkörper-Innenraum
- 4: Pflanzloch
- 5: Rand- oder Eckbereich
- 6: Einhängehaken
- 7: Einhängeschlitz
- 8: Faltung
- 9: Falzgrund
- 10: Hohlkörper
- 11: freier Rand
- 12: Hakenvorsprung
- 13: Rahmen
- 14: Platte
- 15: Einsetzanschlag
- 16: Loch
- 17: Gebäudewand
- 18: Abkantung
- 19: Doppelkantung
- 20: außenliegendes Blech
- 21: innenliegendes Blech
- 22: Abbug des Bleches 20
- 23: Abbug des Bleches 21
- 24: Zwischenraum
- 100: Vorwand

## Patentansprüche

1. Bausatz zur Montage eines bepflanzbaren Wandgartens, der aus wenigstens zwei Wandelementen (1, 2) gebildet ist, von denen wenigstens ein Wandelement mindestens ein Pflanzloch (4) aufweist, durch welche die in einem auf der einen Seite der Wandelemente vorgesehenen Pflanzsubstrat verwurzelbaren Pflanzen nach außen hindurchwachsen können, wobei die Wandelemente (1, 2) des Bausatzes durch Steckverbindungen miteinander verbindbar sind, wobei von den benachbarten Wandelementen (1, 2) an einander zugewandten Rand- oder Eckbereichen (5) ein erstes Wandelement (1) wenigstens einen Einhängehaken (6) aufweist, der (6) in einen Einhängeschlitz (7) an einem benachbarten zweiten Wandelement (2) derart einführbar ist, dass der wenigstens eine Einhängehaken (6) mit einem Hakenvorsprung (12) eine den zugeordneten Einhängeschlitz (7) umgrenzende Randzone des zweiten Wandelements (2) hintergreift, wobei zumindest an dem zumindest einen ersten und/oder an dem wenigstens einen zweiten Wandelement (1, 2) zumindest ein Pflanzloch (4) vorgesehen ist, und wobei das zumindest eine erste und/oder das wenigstens eine zweite Wandelement jeweils als blecherne Kassette(n) ausgebildet ist/sind, wobei der Bausatz zur Montage eines einen zumindest umfangsseitig geschlossenen Hohlkörper (10) bildenden Wandgartens ausgebildet ist, der in seinem Hohlkörper-Innenraum mit Erde, Sand oder dergleichen Pflanzsubstrat befüllbar ist, **dadurch gekennzeichnet, dass** der als Hohlkörper (10) ausgebildete Wandgarten an zumindest einem seiner den Hohlkörper-Umfang bildenden Wandelemente (1, 2) die Pflanzlöcher (4) aufweist.

2. Bausatz nach Anspruch 1, **dadurch gekennzeichnet**, der Hohlkörper (10) an zumindest einer Seite seines Hohlkörper-Umfangs, vorzugsweise an zwei gegenüberliegenden Seiten seines Hohlkörper-Umfangs und insbesondere an allen Seiten des Hohlkörper-Umfangs Pflanzlöcher (4) aufweist.

3. Bausatz nach einem der Ansprüche 1 oder 2, **dadurch gekennzeichnet, dass** der aus den Wandelementen (1, 2) des Bausatzes montierte Hohlkörper (10) einen rechteckigen Querschnitt aufweist.

4. Bausatz nach einem der Ansprüche 1 bis 3, **dadurch gekennzeichnet, dass** gegenüberliegende Umfangsseiten des Hohlkörpers (10) und insbesondere dessen Schmalseiten jeweils aus einem zweiten Wandelement (2) gebildet sind.

5. Bausatz nach Anspruch 4, **dadurch gekennzeichnet, dass** die zweiten Wandelemente (2) trapezförmig ausgebildet sind.

6. Bausatz nach einem der Ansprüche 4 bis 5, **dadurch gekennzeichnet, dass** die zweiten Wandelemente (2) jeweils die Form eines gleichschenkligen Trapezes aufweisen.

7. Bausatz nach Anspruch 6, **dadurch gekennzeichnet, dass** die längere Grundseite der Trapezform eines jeden zweiten Wandelementes (2) bodenseitig angeordnet ist.

8. Bausatz nach einem der Ansprüche 4 bis 7, **dadurch gekennzeichnet, dass** die zweiten Wandelemente (2) pflanzlochfrei ausgebildet sind.

9. Bausatz nach einem der Ansprüche 4 bis 8, **dadurch gekennzeichnet, dass** die ersten und/oder die zweiten Wandelemente (1, 2) als Blechformteile ausgestaltet sind oder Blechformteile aufweisen.

10. Bausatz nach einem der Ansprüche 4 bis 9, **dadurch gekennzeichnet, dass** die zweiten Wandelemente (2) in ihren mit den ersten Wandelementen (1) verbundenen Randbereichen eine falzförmige Kantung (8) aufweisen, deren Falzgrund (9) dem benachbarten ersten Wandelement (1) als Auflager dient und in dem einem freien Rand (11) abgewandten Eckbereich dieses Falzgrundes (9) zumindest einen Einhängeschlitz (7) aufweisen, deren Falzgrund (9) dem benachbarten ersten Wandelement (1) als Auflager dient und zumindest einen Einhängeschlitz (7) aufweist.

11. Bausatz nach Anspruch 10, **dadurch gekennzeichnet, dass** der Einhängeschlitz (7) in dem einem freien Rand (11) abgewandten Eckbereich des Falzgrundes (9) angeordnet ist.

12. Bausatz nach einem der Ansprüche 4 bis 11, **dadurch gekennzeichnet, dass** die ersten und/oder die zweiten Wandelemente als wärmeisolierende Wandelemente (1, 2) ausgebildet sind.

13. Bausatz nach einem der Ansprüche 4 bis 12, **dadurch gekennzeichnet, dass** die ersten und/oder die zweiten Wandelemente jeweils einen blechernen und insbesondere als Blechformteil ausgebildeten Rahmen (13) haben, in welchem Rahmen (13) zumindest eine Platte (14) eingesetzt ist, die gegebenenfalls wenigstens ein Pflanzloch (4) aufweist.

14. Bausatz nach einem der Ansprüche 1 bis 13, **dadurch gekennzeichnet, dass** das zumindest eine erste und/oder das wenigstens eine zweite Wandelement jeweils als als Blechformteil ausgestaltete Kassette(n) ausgebildet ist/sind.

15. Bausatz nach Anspruch 4 oder einem von Anspruch 4 abhängigen Anspruch, **dadurch gekennzeichnet, dass** die ersten und/oder die zweiten Wandelemente jeweils eine Wärmeisolierung aus zumindest einem außenliegenden Blech und wenigstens einem davon beabstandeten innenliegenden Blech aufweisen.

16. Bausatz nach Anspruch 14 oder 15, **dadurch gekennzeichnet, dass** in die als Kassette ausgebildeten Wandelemente zumindest eine Platte eingelegt ist.

17. Bausatz nach einem der Ansprüche 13 bis 16, **dadurch gekennzeichnet, dass** die Platte (14) aus zumindest einem außenliegenden Blech und wenigstens einem davon beabstandeten innenliegenden Blech gebildet ist.

18. Bausatz nach einem der Ansprüche 1 bis 17, **dadurch gekennzeichnet, dass** in den die Wärmeisolierung bildenden Blechen zumindest ein Pflanzloch vorgesehen ist, und dass ein das zumindest eine Pflanzloch umgrenzende Abbug zumindest eines dieser Bleche bei zusammengesetztem Bausatz in Richtung zum benachbarten Blech abgewinkelt ist.

19. Bausatz nach Anspruch 18, **dadurch gekennzeichnet, dass** der das zumindest eine Pflanzloch umgrenzende Abbug zumindest eines der eine Wärmeisolierung bildenden Bleche als Abstandhalter dient und dazu vorzugsweise bei zusammengesetztem Bausatz am benachbarten Blech des Wandelementes (1; 2) anliegt.

20. Bausatz nach einem der Ansprüche 13 bis 19, **dadurch gekennzeichnet, dass** die zumindest eine Platte (14) als wärmeisolierende Dämmstoffplatte ausgebildet ist.

21. Bausatz nach einem der Ansprüche 13 bis 20, **dadurch gekennzeichnet, dass** die zumindest eine Platte (14) eines jeden ersten und/oder zweiten Wandelements als insbesondere wasserbeständige und/oder mechanisch belastbare Hartschaumstoffplatte, vorzugsweise als Extruder-Polystyrol-Hartschaumplatte, ausgebildet ist.

22. Bausatz nach einem der Ansprüche 13 bis 21, **dadurch gekennzeichnet, dass** die zumindest eine Platte (14) bis zu einem außenliegenden und vorzugsweise umlaufenden Einsetzanschlag (15) in den blechernen Rahmen (13) des zugeordneten ersten und/oder zweiten Wandelements (2) einsetzbar ist.

23. Bausatz nach einem der Ansprüche 1 bis 22, **dadurch gekennzeichnet, dass** gegenüberliegende Umfangsseiten des als Hohlkörper (10) ausgebildeten Wandgartens und/oder dessen Längsseite(n jeweils) aus mindestens einem ersten Wandelement (2), vorzugsweise aus mindestens zwei ersten Wandelementen (2) gebildet sind.

24. Bausatz nach einem der Ansprüche 1 bis 23, **dadurch gekennzeichnet, dass** der aus dem Bausatz montierte Wandgarten bodenseitig und/oder auf der dem Boden abgewandten Seite offen ausgebildet ist.

25. Bausatz nach einem der von Anspruch 4 abhängigen Ansprüche 13 bis 24, **dadurch gekennzeichnet, dass** die ersten und/oder die zweiten Wandelemente (1; 2) an einem ihrer Längsränder und vorzugsweise an dem der Abkantung (18) abgewandten Längsrand eine Doppelkantung (19) aufweisen, durch die eine Aufnahmenut gebildet ist, in welche Aufnahmenut die Platte (14) dieses Wandelements (1) gehalten ist.

26. Bausatz nach einem der Ansprüche 1 bis 25, **dadurch gekennzeichnet, dass** das zumindest eine erste und das wenigstens eine zweite Wandelement (1; 2) im Winkel zueinander und vorzugsweise im rechten Winkel zueinander angeordnet sind.

27. Bausatz nach einem der Ansprüche 1 bis 26, **dadurch gekennzeichnet, dass** die Wandelemente (1, 2) des Wandgartens an einem Bauwerk befestigbar sind.

28. Bausatz nach einem der Ansprüche 1 bis 27, **dadurch gekennzeichnet, dass** die Wandelemente (1, 2) des Bausatzes durch die Steckverbindungen lösbar miteinander verbindbar sind.

## Claims

1. Kit for mounting a plantable wall garden which is formed from at least two wall elements (1, 2), of which at least one wall element has at least one planting hole (4) through which the plants that can be rooted in a planting substrate provided on the one side of the wall elements can grow outwards, wherein the wall elements (1, 2) of the kit are connectable to each other by plug-in connections, wherein, of the adjacent wall elements (1, 2), at mutually facing edge or corner regions (5), a first wall element (1) has at least one mounting hook (6), which (6) is insertable into a mounting slot (7) on an adjacent second wall element (2) in such a manner that the at least one mounting hook (6) engages by means of a hook protrusion (12) behind an edge zone, which surrounds the associated mounting slot (7), of the second wall element (2), wherein at least one planting hole (4) is provided at least on the at least one first and/or on the at least one second wall element (1, 2), and wherein the at least one first and/or the at least one second wall element are/is designed in each case as a sheet-metal cassette/sheet-metal cassettes, wherein the kit is designed for mounting a wall garden which forms an at least circumferentially closed hollow body (10) and can be filled in its hollow body interior with earth, sand or a similar planting substrate, **characterized in that** the wall garden designed as a hollow body (10) has the planting holes (4) on at least one of its wall elements (1, 2) forming the hollow body circumference.

2. Kit according to Claim 1, **characterized in that** the hollow body (10) has planting holes (4) on at least one side of its hollow body circumference, preferably on two opposite sides of its hollow body circumference and in particular on all sides of the hollow body circumference.

3. Kit according to either of Claims 1 and 2, **characterized in that** the hollow body (10) assembled from the wall elements (1, 2) of the kit has a rectangular cross section.

4. Kit according to one of Claims 1 to 3, **characterized in that** opposite circumferential sides of the hollow body (10) and in particular the narrow sides thereof are each formed from a second wall element (2).

5. Kit according to Claim 4, **characterized in that** the second wall elements (2) are trapezoidal.

6. Kit according to one of Claims 4 to 5, **characterized in that** the second wall elements (2) each have the form of an isosceles trapezium.

7. Kit according to Claim 6, **characterized in that** the longer base side of the trapezoidal shape of each second wall element (2) is arranged on the bottom side.

8. Kit according to one of Claims 4 to 7, **characterized in that** the second wall elements (2) are formed without planting holes.

9. Kit according to one of Claims 4 to 8, **characterized in that** the first and/or the second wall elements (1, 2) are configured as sheet-metal shaped parts or have sheet-metal shaped parts.

10. Kit according to one of Claims 4 to 9, **characterized in that** the second wall elements (2), in their edge regions connected to the first wall elements (1), have a fold-like bend (8), the fold base (9) of which is used as a support for the adjacent first wall element (1), and have at least one mounting slot (7) in the corner region of said fold base (9) facing away from a free edge (11), the fold base (9) of which is used as a support for the adjacent first wall element (1), and has at least one mounting slot (7).

11. Kit according to Claim 10, **characterized in that** the mounting slot (7) is arranged in the corner region of the fold base (9) facing away from a free edge (11).

12. Kit according to one of Claims 4 to 11, **characterized in that** the first and/or the second wall elements are in the form of heat-insulating wall elements (1, 2).

13. Kit according to one of Claims 4 to 12, **characterized in that** the first and/or the second wall elements each have a sheet-metal frame (13) which is designed in particular as a sheet-metal shaped part and in which frame (13) at least one panel (14) optionally having at least one planting hole (4) is inserted.

14. Kit according to one of Claims 1 to 13, **characterized in that** the at least one first and/or the at least one second wall element are/is each designed as a cassette/cassettes configured as a sheet-metal shaped part.

15. Kit according to Claim 4 or a claim which is dependent on Claim 4, **characterized in that** the first and/or the second wall elements each have heat insulation formed from at least one outer sheet and at least one inner sheet spaced apart therefrom.

16. Kit according to Claim 14 or 15, **characterized in that** at least one panel is inserted into the wall elements designed as a cassette.

17. Kit according to one of Claims 13 to 16, **characterized in that** the panel (14) is formed from at least one outer sheet and at least one inner sheet spaced apart therefrom.

18. Kit according to one of Claims 1 to 17, **characterized in that** at least one planting hole is provided in the sheets forming the heat insulation, and **in that**, when the kit is assembled, a bent section, surrounding the at least one planting hole, of at least one of said sheets is angled in the direction of the adjacent sheet.

19. Kit according to Claim 18, **characterized in that** the bent section, surrounding the at least one planting hole, of at least one of the sheets forming heat insulation is used as a spacer and, for this purpose, when the kit is assembled, preferably lies against the adjacent sheet of the wall element (1; 2).

20. Kit according to one of Claims 13 to 19, **characterized in that** the at least one panel (14) is designed as a heat-insulating insulating-material panel.

21. Kit according to one of Claims 13 to 20, **characterized in that** the at least one panel (14) of each first and/or second wall element is designed as an in particular water-resistant and/or mechanically loadable rigid foam panel, preferably as an extruded polystyrene rigid foam panel.

22. Kit according to one of Claims 13 to 21, **characterized in that** the at least one panel (14) can be inserted into the sheet-metal frame (13) of the associated first and/or second wall element (2) as far as an outer and preferably circumferential insertion stop (15) .

23. Kit according to one of Claims 1 to 22, **characterized in that** opposite circumferential sides of the wall garden designed as a hollow body (10) and/or the longitudinal side/sides thereof are formed in each case from at least one first wall element (2), preferably from at least two first wall elements (2).

24. Kit according to one of Claims 1 to 23, **characterized in that** the wall garden assembled from the kit is open on the bottom side and/or on the side facing away from the ground.

25. Kit according to one of Claims 13 to 24 dependent on Claim 4, **characterized in that** the first and/or the second wall elements (1; 2), on one of their longitudinal edges and preferably on the longitudinal edge facing away from the bent edge (18), have a double bend (19), by means of which a receiving groove is formed, in which receiving groove the panel (14) of said wall element (1) is held.

26. Kit according to one of Claims 1 to 25, **characterized in that** the at least one first and the at least one second wall element (1; 2) are arranged at an angle to each other and preferably at a right angle to each other.

27. Kit according to one of Claims 1 to 26, **characterized in that** the wall elements (1, 2) of the wall garden are fastenable to a building.

28. Kit according to one of Claims 1 to 27, **characterized in that** the wall elements (1, 2) of the kit are releasably connectable to each other by means of the plug-in connections.

## Revendications

1. Jeu de montage d'un jardin mural pouvant être recouvert de plantes qui est constitué d'au moins deux éléments muraux (1, 2) parmi lesquels au moins un élément mural présente au moins un trou de plantation (4) à travers lequel les plantes pouvant être enracinées dans un substrat de culture prévu sur une face des éléments muraux peuvent pousser vers l'extérieur, dans lequel les éléments muraux (1, 2) du jeu peuvent être reliés entre eux par des connexions enfichables, dans lequel, dans des zones de bordure ou d'angle (5) tournées l'une vers l'autre, un premier élément mural (1) parmi les éléments muraux (1, 2) adjacents comporte au moins un crochet d'accrochage (6) qui (6) peut être inséré dans une fente d'accrochage (7) sur un deuxième élément mural (2) adjacent de telle sorte que l'au moins un crochet d'accrochage (6) entre en prise par derrière, par le biais d'un bec de crochet (12), avec une zone de bordure du deuxième élément mural (2) délimitant la fente d'accrochage (7) associée, et dans lequel l'au moins un premier et/ou l'au moins un deuxième élément mural est/sont configuré(s) comme une/des cassettes en tôle, lequel jeu est configuré pour le montage d'un jardin mural formant un corps creux (10) fermé au moins sur sa périphérie qui peut être rempli dans son espace intérieur de corps creux avec de la terre, du sable ou autre substrat de culture similaire, **caractérisé en ce que** le jardin mural configuré comme un corps creux (10) comporte les trous de plantation (4) sur au moins un de ses éléments muraux (1, 2) formant la périphérie du corps creux.

2. Jeu selon la revendication 1, **caractérisé en ce que** le corps creux (10) comporte des trous de plantation (4) sur au moins une face de sa périphérie de corps creux, de préférence sur deux faces opposées entre elles de sa périphérie de corps creux et en particulier sur toutes les faces de sa périphérie de corps creux.

3. Jeu selon une des revendications 1 ou 2, **caractérisé en ce que** le corps creux (10) monté à partir des éléments muraux (1, 2) du jeu présente une section transversale parallélépipédique.

4. Jeu selon une des revendications 1 à 3, **caractérisé en ce que** des faces périphériques opposées entre elles du corps creux (10) et en particulier ses faces étroites sont formées chacune à partir d'un deuxième élément mural (2).

5. Jeu selon la revendication 4, **caractérisé en ce que** les deuxièmes éléments muraux (2) sont de forme trapézoïdale.

6. Jeu selon une des revendications 4 à 5, **caractérisé en ce que** les deuxièmes éléments muraux (2) présentent chacun la forme d'un trapèze isocèle.

7. Jeu selon la revendication 6, **caractérisé en ce que** la face de base plus longue de la forme de trapèze de chaque deuxième élément mural (2) est située du côté du fond.

8. Jeu selon une des revendications 4 à 7, **caractérisé en ce que** les deuxièmes éléments muraux (2) sont formés sans trou de plantation.

9. Jeu selon une des revendications 4 à 8, **caractérisé en ce que** les premiers et/ou les deuxièmes éléments muraux (1, 2) sont conçus comme des pièces de tôle ou comportent des pièces de tôle.

10. Jeu selon une des revendications 4 à 9, **caractérisé en ce que** les deuxièmes éléments muraux (2) présentent dans leurs zones de bordure reliées aux premiers éléments muraux (1) un pli en forme de feuillure (8) dont le fond de feuillure (9) sert de support au premier élément mural (1) adjacent et présentent dans la zone d'angle de ce fond de feuillure (9) opposée à un bord libre (11) au moins une fente d'accrochage (7) dont le fond de feuillure (9) sert de support au premier élément mural (1) adjacent et présente au moins une fente d'accrochage (7).

11. Jeu selon la revendication 10, **caractérisé en ce que** la fente d'accrochage (7) est située dans la zone d'angle du fond de feuillure (9) opposée à un bord libre (11).

12. Jeu selon une des revendications 4 à 11, **caractérisé en ce que** les premiers et/ou les deuxièmes éléments muraux sont conçus comme des éléments muraux isolants thermiquement (1, 2).

13. Jeu selon une des revendications 4 à 12, **caractérisé en ce que** les premiers et/ou les deuxièmes éléments ont chacun un châssis (13) en tôle et en particulier configuré comme une pièce de tôle, dans lequel châssis (13) est insérée au moins une plaque (14) qui présente le cas échéant au moins un trou de plantation (4).

14. Jeu selon une des revendications 4 à 13, **caractérisé en ce que** l'au moins un premier et/ou l'au moins un deuxième élément mural est/sont configuré(s) comme une/des cassette(s) conformée(s) comme une/des pièce(s) de tôle.

15. Jeu selon la revendication 4 ou une revendication dépendante de la revendication 4, **caractérisé en ce que** les premiers et/ou les deuxièmes éléments muraux présentent chacun une isolation thermique constituée d'au moins une tôle extérieure et d'au moins une tôle intérieure espacée de celle-ci.

16. Jeu selon la revendications 14 ou 15, **caractérisé en ce qu'**au moins une plaque est insérée dans les éléments muraux configurés comme une cassette.

17. Jeu selon une des revendications 13 à 16, **caractérisé en ce que** la plaque (14) est constituée d'au moins une tôle extérieure et d'au moins une tôle intérieure espacée de celle-ci.

18. Jeu selon une des revendications 1 à 17, **caractérisé en ce qu'**au moins un trou de plantation est prévu dans les tôles formant l'isolation thermique et qu'un rabat entourant l'au moins un trou de plantation d'une de ces tôles est incliné en direction de la tôle adjacente lorsque le jeu est assemblé.

19. Jeu selon la revendication 18, **caractérisé en ce que** l'au moins rabat entourant un trou de plantation d'au moins une des tôles formant l'isolation thermique sert d'écarteur et est appliqué pour cela de préférence sur la tôle adjacente de l'élément mural (1, 2) lorsque le jeu est assemblé.

20. Jeu selon une des revendications 13 à 19, **caractérisé en ce que** l'au moins une plaque (14) est configurée comme une plaque d'isolation isolante thermiquement.

21. Jeu selon une des revendications 13 à 20, **caractérisé en ce que** l'au moins une plaque (14) d'un premier et/ou d'un deuxième élément mural est configurée comme une plaque en mousse dure en particulier étanche à l'eau et/ou résistante mécaniquement, de préférence comme une plaque en mousse dure de polystyrène extrudé.

22. Jeu selon une des revendications 13 à 21, **caractérisé en ce que** l'au moins une plaque (14) peut être insérée jusqu'à une butée d'insertion extérieure et de préférence périphérique (15) dans le châssis de tôle (13) du premier et/ou du deuxième élément mural (2) associé.

23. Jeu selon une des revendications 1 à 22, **caractérisé en ce que** des faces périphériques opposées du jardin mural configuré comme un corps creux (10) et/ou sa/chacune de ses face(s) longitudinale(s) sont constituées d'au moins un premier élément mural (2), de préférence d'au moins deux premiers éléments muraux (2).

24. Jeu selon une des revendications 1 à 23, caractérisé en ce le jardin mural monté à partir du jeu est ouvert du côté du fond et/ou sur la face opposée au fond.

25. Jeu selon une des revendications 13 à 24 dépendantes de la revendication 4, **caractérisé en ce que** les premiers et/ou les deuxièmes éléments muraux (1, 2) présentent sur un de leurs bords longitudinaux et de préférence sur le bord longitudinal opposé au pli (18) un double pli (19) par le biais duquel est formée une rainure de réception dans laquelle la plaque (14) de cet élément mural (1) est maintenue.

26. Jeu selon une des revendications 1 à 25, **caractérisé en ce que** l'au moins un premier et l'au moins un deuxième élément mural (1, 2) sont disposés selon un angle entre eux et de préférence à angle droit entre eux.

27. Jeu selon une des revendications 1 à 26, **caractérisé en ce que** les éléments muraux (1, 2) du jardin mural peuvent être fixés sur un bâtiment.

28. Jeu selon une des revendications 1 à 27, **caractérisé en ce que** les éléments muraux (1, 2) du jeu peuvent être reliés entre eux de manière amovible par les connexions enfichables.
